# FASCICULE DE BREVET EUROPEEN

(11) **EP 2 072 735 B1**
(45) Date de publication et mention de la délivrance du brevet: **15.05.2013**
(21) Numéro de dépôt: 08022009.8
(22) Date de dépôt: 18.12.2008
(51) Int. Cl.: E05F 11/53, B60J 1/14, E05F 11/38

(54) **Dispositif d'obturation d'une baie de véhicule automobile à panneau mobile coulissant et rails concentriques, et véhicule automobile correspondant**
Schliesseinrichtung für eine Öffnung eines Kraftfahrzeugs mit einem beweglichen Schiebepaneel und konzentrischen Gleitschienen, und zugehöriges Kraftfahrzeug
Closure for a vehicle bay with a sliding mobile panel and concentric rails, and corresponding vehicle

(30) Priorité: 18.12.2007 FR 0759961
(43) Date de publication de la demande: 24.06.2009
(73) Titulaire: Advanced Comfort Systems France SAS - ACS France, 79300 Bressuire (FR)
(72) Inventeur: Defreitas, Sandra, 79250 Nueil Les Aubiers (FR); Merlet, David, 85590 Saint-Maldo du Bois (FR); Papon, Jean-Paul, 79300 Bressuire (FR); Deborde, Laurent, 49310 Vihiers (FR); Giret, Frédéric, 79300 Bressuire (FR); Sanchez, Luc, 86170 Cisse (FR)
(74) Mandataire: Bioret, Ludovic

(56) Documents cités:
- DE-A1- 19 853 625
- DE-U1-202004 015 589
- FR-A- 2 583 003
- US-A- 4 615 143

## Description

### 1. Domaine de l'invention

Le domaine de l'invention est celui des véhicules automobiles.

Plus précisément, l'invention concerne les baies de tels véhicules et en particulier les baies équipées d'une partie mobile permettant de libérer ou d'obturer une ouverture.

### 2. Etat de la technique

On connaît de nombreux types de dispositifs d'obturation de baies de véhicules que ces baies soient aménagées dans une porte ou directement dans la carrosserie. Le plus souvent, ces dispositifs sont munis d'une ou plusieurs vitres, et solidarisés à la carrosserie à l'aide d'un cadre de liaison.

Le document DE 20 2004 015 589 U divulgue un tel vitre pivotant de véhicule.

Le Déposant de la présente demande de brevet a développé un nouveau type de dispositif d'obturation connu sous le terme « baie flush », et décrit notamment dans le document de brevet EP-0 778 168. Selon cette technique, le dispositif comprend un panneau fixe réalisé en une ou plusieurs parties, pouvant être intégralement vitré ou présenter au moins une zone vitrée, et dont les bords sont solidarisés au niveau de la périphérie de la face de ce panneau fixe tournée vers l'intérieur du véhicule, par collage, sur des bords correspondants de la carrosserie. On obtient ainsi un aspect affleurant entre le panneau fixe et la carrosserie, vu de l'extérieur, du fait de l'absence de cadre.

Dans le cas d'un dispositif à panneau mobile coulissant, ce dernier est monté sur deux rails collés sur la face du panneau fixe tourné vers l'intérieur du véhicule. Les rails sont conçus de façon à permettre :
- d'une part, le coulissement du panneau mobile, et
- d'autre part, en coopération avec des moyens de décalage, son déplacement par rapport au panneau fixe, lorsque le panneau mobile est en regard de l'ouverture, de façon qu'il puisse venir, en position d'obturation, dans le plan du panneau fixe, et en position d'ouverture dans un plan de coulissement parallèle au panneau fixe.

Cette approche s'avère bien adaptée à certaines baies, notamment de forme rectangulaire ou trapézoïdale. Dans ce cas, les rails sont rectilignes, et s'étendent selon les cas parallèlement l'un à l'autre ou non parallèlement, des moyens de compensation des variations de longueur étant alors prévues.

En revanche, cette technique n'est pas adaptée à des formes différentes, par exemple, triangulaires ou présentant un bord en arc de cercle ou d'ellipse, que l'on rencontre notamment sur certains véhicules modernes, par exemple pour les vitres de custode.

Ces vitres sont généralement équipées d'un simple panneau fixe. Il serait cependant souvent souhaitable, ou tout du moins intéressant, que de tels panneaux puissent présenter une ouverture.

### 3. Objectifs de l'invention

L'invention a notamment pour objectif de fournir une solution à ce besoin.

Plus particulièrement, un objectif de l'invention est de fournir un dispositif d'obturation affleurant, adapté à des formes particulières de baies, par exemple en forme de secteur de disque ou d'ellipse.

Un autre objectif de l'invention est de fournir un tel dispositif d'obturation permettant de définir une ouverture relativement importante, et facilement exportable.

L'invention a également pour objectif de fournir un tel dispositif d'obturation, ne présentant pas de cadre dépassant à l'extérieur du véhicule et présentant un aspect totalement affleurant en position fermée.

### 4. Exposé de l'invention

Ces objectifs, ainsi que d'autres qui apparaîtront plus clairement par la suite, sont atteints par un dispositif d'obturation d'une baie ménagée dans la carrosserie d'un véhicule automobile, comprenant :
- un panneau fixe dans lequel est définie une ouverture, la face dudit panneau fixe tournée vers l'intérieur dudit véhicule étant apte à être solidarisée par sa périphérie sur des bords correspondants de ladite carrosserie, de sorte que ledit panneau fixe affleure avec ladite carrosserie vu de l'extérieur ;
- au moins un panneau mobile par rapport audit panneau fixe, entre une position d'obturation de ladite ouverture, dans laquelle ledit panneau mobile se trouve dans le plan formé par ledit panneau fixe et au moins une position de coulissement, dans laquelle ledit panneau mobile se trouve dans un plan de coulissement sensiblement parallèle audit plan formé par ledit panneau fixe; et
- des moyens de décalage dudit panneau mobile entre ladite position d'obturation et ladite position de coulissement et vice-versa.

Selon l'invention, ledit panneau fixe porte, sur ladite face tournée vers l'intérieur dudit véhicule, un premier et un second rails de guidage concentriques, définissant chacun un arc de cercle de façon à guider ledit panneau mobile en pivotement dans ledit plan de coulissement et autour d'un axe de pivotement perpendiculaire audit plan de coulissement, lorsque ledit panneau mobile est dans ladite position de coulissement.

Ces deux rails concentriques permettent de contrôler efficacement le déplacement du panneau mobile, de façon sûre et fiable.

Selon un mode de réalisation particulier de l'invention, le panneau mobile présente une forme sensiblement en secteur de disque ou en secteur de couronne.

Cette forme est particulièrement adaptée aux rails en arc de cercle. Cependant, certains bords du panneau mobile peuvent être adaptés, en fonction des besoins.

De façon avantageuse, au moins un desdits rails comprend des moyens de guidage dudit panneau mobile de façon à permettre le passage de ce dernier dudit plan d'obturation dans ledit plan de coulissement, et réciproquement, lorsque ledit panneau mobile est en regard de ladite ouverture.

Notamment, dans un mode de réalisation particulier, un desdits rails porte au moins un coulisseau comprenant au moins deux patins dans chacun desquels est définie une gorge de guidage présentant au moins une portion inclinée, et dans chacune desquelles circulent un pion de guidage solidaire dudit panneau mobile.

Des moyens de rappel tendant à ramener ledit panneau mobile dans ladite position d'obturation lorsque ledit panneau est en regard de ladite ouverture sont alors avantageusement prévus.

Selon un mode de réalisation préférentiel de l'invention, ledit premier rail s'étend au voisinage du bord dudit secteur éloigné dudit axe de pivotement.

Ledit second rail de guidage est préférentiellement proche dudit axe de pivotement.

Selon un aspect avantageux de l'invention, ledit panneau mobile est solidaire d'une poignée d'entraînement et/ou de verrouillage.

Cette poignée est préférentiellement montée au niveau dudit second rail, pour faciliter l'actionnement et le déplacement du panneau mobile.

Dans un mode de réalisation particulier de l'invention, ledit second rail et/ou ladite poignée coopèrent avec des moyens de masquage solidaires de ladite structure fixe.

Ces moyens de masquage permettent de dissimuler les moyens techniques mis en oeuvre, dans un espace suffisamment réduit pour ne pas nuire fortement au clair de baie.

De façon avantageuse, ladite poignée d'entraînement coopère avec des moyens de blocage de ladite poignée dans une position prédéterminée par rapport audit panneau coulissant, dite position d'entraînement, de façon à contrôler le déplacement dudit panneau mobile en coulissement.

Dans cette position prédéterminée, la poignée est donc fixe, par rapport au panneau mobile, et facilite le contrôle du déplacement de ce panneau mobile.

En revanche, ladite poignée est préférentiellement mobile suivant une direction perpendiculaire au plan de ladite structure fixe, de façon à faire passer ledit panneau mobile de ladite position d'obturation à une position de dégagement dans un plan parallèle au plan de ladite structure fixe, sensiblement en regard de ladite ouverture, et réciproquement.

Selon un mode de réalisation de l'invention, ladite poignée comprend des moyens de verrouillage dudit panneau coopérant avec une gâche portée par ledit panneau fixe (par exemple dans au moins un des rails), dans ladite position d'obturation.

D'autres moyens de verrouillage, agissant directement sur la poignée par exemple, sont également envisageables.

Selon un mode de réalisation particulier, le dispositif d'obturation peut comprendre des moyens d'actionnement motorisés dudit panneau mobile et/ou de ladite poignée.

Bien sûr, le verrouillage et le guidage du panneau mobile peuvent également être manuel.

Le dispositif de l'invention peut être adapté à de nombreux types de panneau fixe. Notamment, ce panneau fixe peut définir sensiblement un secteur de disque. Dans ce cas, ledit premier rail peut coïncider sensiblement avec un bord dudit panneau fixe.

Selon une autre caractéristique avantageuse d'un mode de réalisation particulier, au moins un desdits rails s'étend au-delà de la surface définie par ledit panneau fixe.

Cette approche permet d'augmenter le débattement du panneau mobile, et donc la dimension de l'ouverture. Le rail peut notamment se prolonger à l'intérieur d'un caisson de porte de véhicule, à l'intérieur duquel le panneau mobile pénètre au moins partiellement en position ouverte.
L'invention concerne également un véhicule automobile comprenant au moins un dispositif d'obturation tel que décrit ci-dessus.

### 5. Liste des figures

D'autres caractéristiques et avantages de l'invention apparaîtront à la lecture de la description suivante de modes de réalisation particuliers de l'invention, donnés à titre de simples exemples illustratifs et non limitatifs, et des dessins annexés parmi lesquels :
- la figure 1A illustre un exemple de véhicule équipé d'un dispositif d'obturation selon l'invention ;
- la figure 1B présente le dispositif d'obturation de la figure 1A, vu du côté correspondant à l'intérieur du véhicule ;
- les figures 2A à 2C illustrent schématiquement un exemple de mise en oeuvre du dispositif de la figure 1B, respectivement:

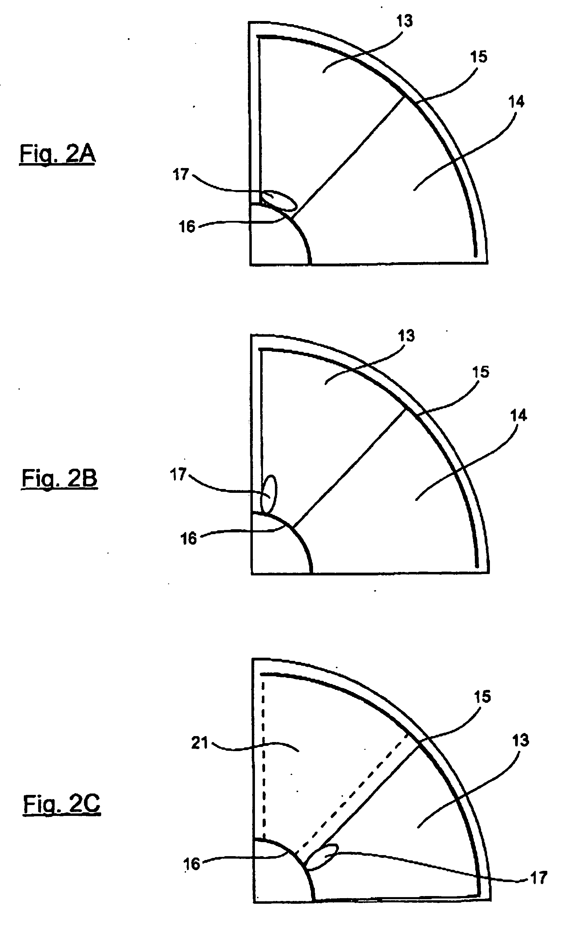

   - figure 2A: position fermée ;
   - figure 2B: position décalée par rapport à l'ouverture;
   - figure 2C: position ouverte;

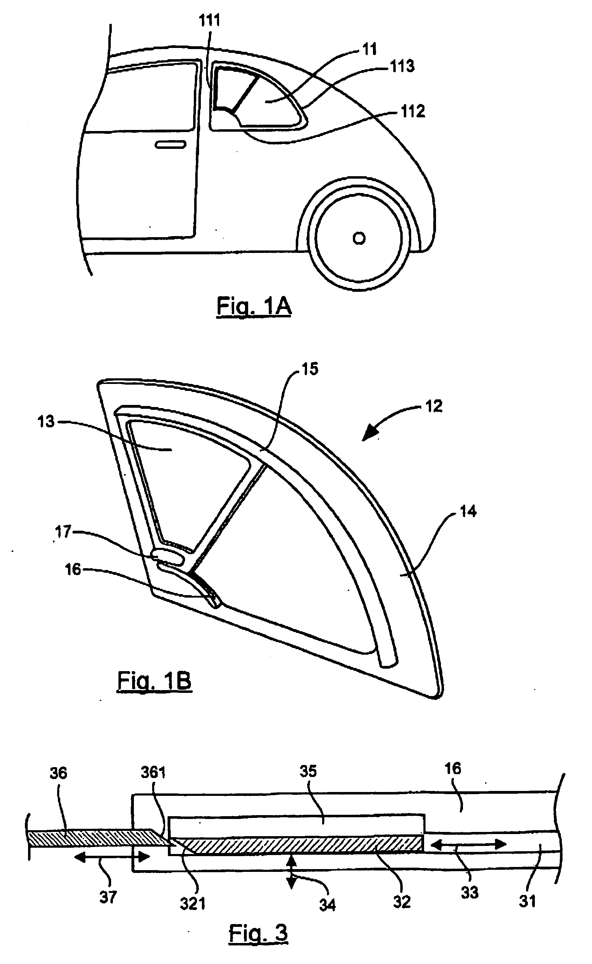

- la figure 3 présente un exemple de mécanisme d'ouverture / fermeture, permettant le passage de la position fermée (figure 2A) à la position décalée (figure 2B), et réciproquement ;

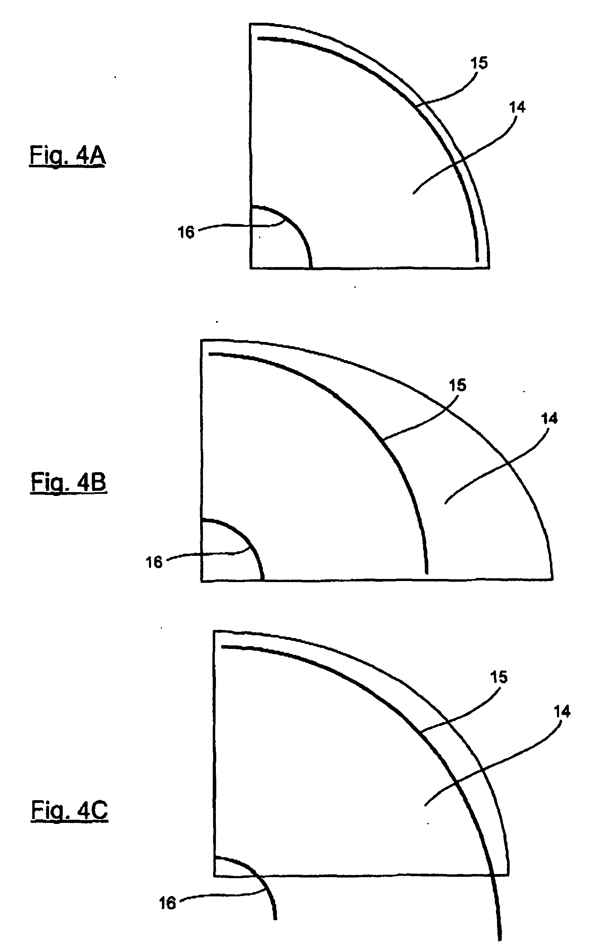

- les figures 4A à 4C montrent trois variantes de forme de panneaux fixes de dispositifs d'obturation selon l'invention ;

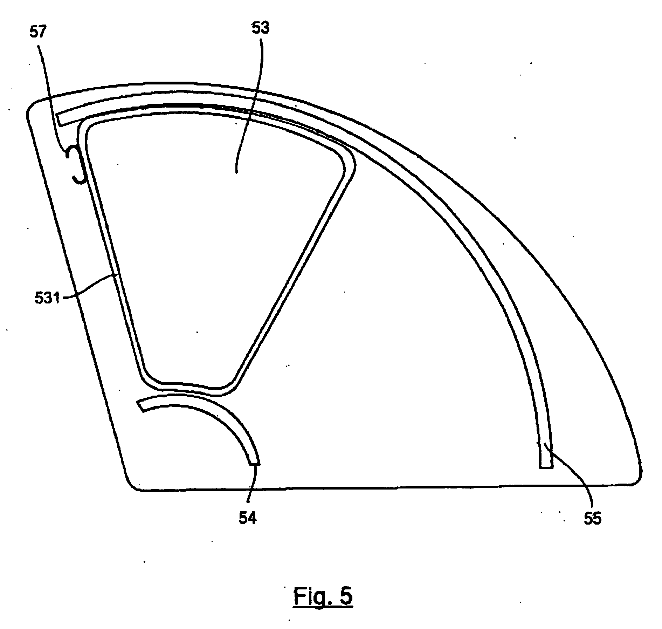

- la figure 5 présente une variante du dispositif de la figure 1B, dans lequel la poignée est montée au voisinage du rail supérieur ;

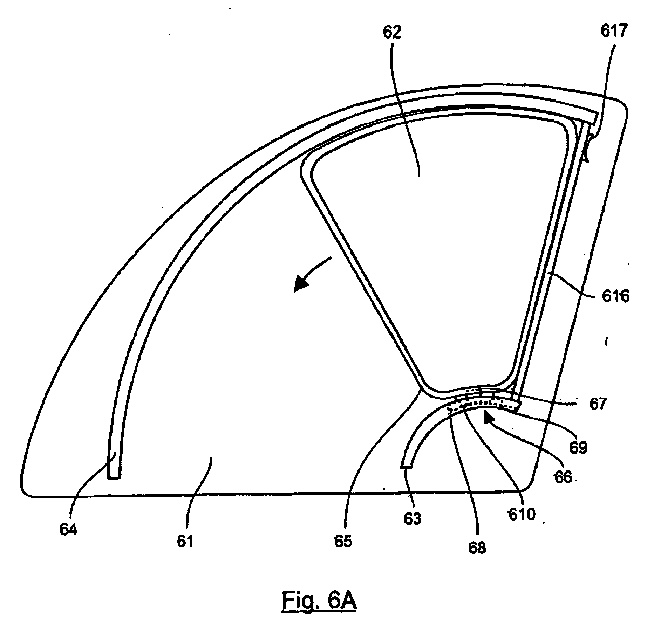

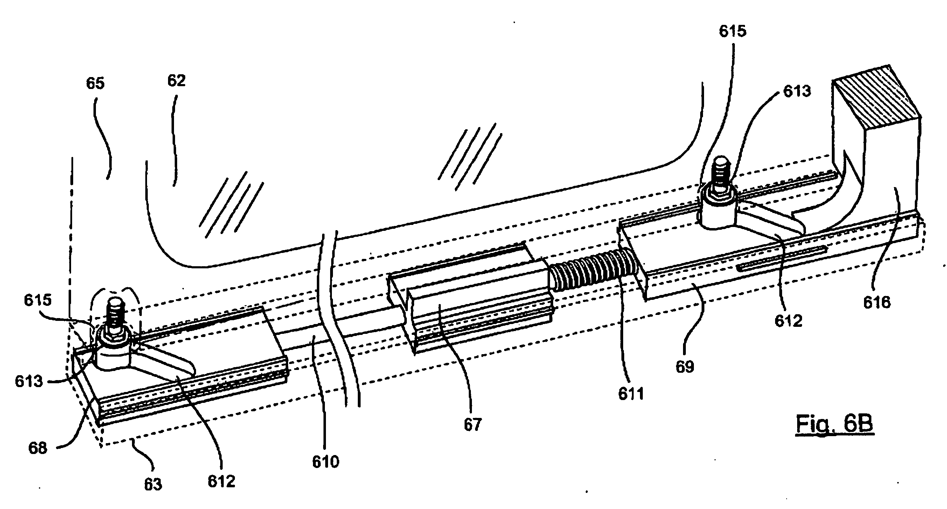

- les figures 6A et 6B illustrent un autre exemple de mode de réalisation de l'invention, dans lequel le panneau mobile est guidé et entraîné dans le rail inférieur à l'aide d'un coulisseau et d'un élément de guidage solidaire du panneau mobile, mobiles l'un par rapport à l'autre.

### 6. Description détaillée

L'invention concerne donc un nouveau type de « baie flush » ou baie affleurante adaptée notamment aux vitres de forme sensiblement triangulaire ou en secteur de disque ou d'ellipse. Il peut notamment s'agir de vitres de custode.

### 6.1. Premier exemple de mode de réalisation de l'invention

Un premier exemple de montage d'un dispositif selon l'invention sur un véhicule, dans l'emplacement d'une vitre de custode, est illustré schématiquement sur la figure 1A.

Ce véhicule présente une baie 11, présentant deux bords rectilignes 111 et 112 définissant sensiblement un angle droit, et un bord 113, qui suit sensiblement une courbe donnée au pavillon. Ce bord 113 peut par exemple définir un arc de cercle ou un arc d'ellipse.

Le dispositif d'obturation d'une telle baie, généralement appelée vitre de custode, est le plus souvent une vitre fixe. L'invention propose de remplacer cette vitre fixe par un dispositif d'obturation 12 (figure 1B) équipé d'une ouverture et d'un panneau mobile coulissant 13 permettant de fermer ou de libérer cette ouverture.

Comme on le voit sur la figure 1B, le dispositif comprend un panneau fixe 14 dont les bords sont libres de tout cadre. Il est ainsi possible de solidariser ce panneau 14 à la carrosserie du véhicule, depuis l'extérieur de celui-ci, à l'aide d'un joint de colle de la même façon qu'on le ferait pour une vitre fixe. Ainsi, aucune adaptation particulière n'est nécessaire, sur le véhicule, pour équiper ce dernier d'un ouvrant au niveau de la vitre de custode.

Le panneau fixe 14 est équipé de deux rails concentriques 15 et 16, définissant chacun des arcs de cercle, de façon à permettre le guidage en pivotement du panneau mobile 13, dans le plan de coulissement parallèle au plan défini par le panneau fixe 14.

Ces deux rails 15 et 16 sont suffisamment éloignés des bords du panneau fixe 14, pour ne pas interférer avec son collage sur les bords de la carrosserie. Cependant, des éléments de liaison et/ou des éléments d'évacuation d'eau peuvent être associés à ces rails, et se prolonger jusqu'à un bord du panneau fixe selon des techniques connues en soi.

Les bords du panneau fixe 14 sont préférentiellement recouverts d'une sérigraphie, visant à dissimuler, de l'extérieur, les bords de la carrosserie, ainsi que les rails 15 et 16.

Le verrouillage et le déplacement en pivotement du panneau 13 peut être assurer de nombreuses manières, manuelles ou motorisées. Comme on le verra par la suite, la cinématique de ce panneau 13 comprend d'une part un déplacement en coulissement dans les rails 14 et 16, et d'autre part un déplacement de fermeture/ouverture pour venir dans une position fermée dans le plan défini par le panneau fixe 14.

Dans le mode de réalisation illustré par la figure 1A, et détaillé par la suite, ces deux mouvements sont assurés à l'aide d'une poignée unique 17, montée au voisinage du rail inférieur 16.

L'utilisation de cette poignée 17 est illustrée schématiquement par les figures 2A à 2C.

Sur la figure 2A, la poignée 17 se trouve en position sensiblement horizontale (et sensiblement parallèle au rail 16). Dans cette position, qui correspond à la position fermée, dans laquelle le panneau mobile 13 est ramené dans le plan du panneau fixe 14, la poignée 17 assure un verrouillage, par exemple par enclenchement d'un pêne dans une gâche appropriée, formée dans le rail 16 ou au voisinage de celui-ci. Ce verrouillage a pour but d'assurer une bonne fermeture du dispositif. Il doit donc avantageusement appliquer une pression suffisante pour assurer l'étanchéité (un joint d'étanchéité, non représenté pouvant être prévu sur le pourtour du panneau mobile 13 ou de l'ouverture correspondante 21).

En position fermée, il peut également être nécessaire d'assurer l'inviolabilité, c'est-à-dire empêcher un forçage par une personne mal intentionnée qui appuierait sur le panneau mobile depuis l'extérieur du véhicule. Pour se faire, le rail supérieur 15 peut être équipé lui-même de moyens de verrouillage, le cas échéant contrôlé par la poignée 17, à l'aide d'un système de tringlerie ou de câbles adapté, et/ou de moyens de rappel visant à maintenir le panneau mobile dans sa position fermée.

Cet aspect est également important pour assurer l'étanchéité, notamment lorsqu'un jet haute pression est appliqué sur le panneau mobile.

Pour assurer le déverrouillage du panneau mobile 13, l'utilisateur redresse la poignée 17 comme illustré dans la figure 2B. Dans cette position, le panneau 13 est décalé pour sortir du plan formé par le panneau fixe 14 (par exemple selon le mécanisme illustré par la figure 3). Il suffit de ramener la poignée dans la position de la figure 2A pour assurer à nouveau la fermeture complète du panneau mobile.

Après avoir placé le panneau mobile 13 dans la position illustrée par la figure 2B il est possible de faire coulisser ce dernier le long des deux rails concentriques 15 et 16, comme illustré par la figure 2C, ce qui permet de libérer l'ouverture 21.

Dans le mode illustré par la figure 2C, le panneau mobile 13 prend une position ouverte unique correspondant à une position de butée dans les deux rails 15 et 16. La poignée 17 reste dans sa position sensiblement perpendiculaire au rail 16. Des moyens de blocage dans cette position (non représentés) peuvent être prévus, pour faciliter la manipulation par un utilisateur. On peut prévoir que la poignée soit équipée d'un bouton de déverrouillage, permettant d'obtenir le basculement de la poignée, pour assurer la fermeture et l'ouverture.

Selon d'autres modes de réalisation, il peut être possible d'immobiliser le panneau mobile 13 dans une position d'ouverture intermédiaire.

Dans une variante avantageuse de ce mode de réalisation de l'invention, il peut également être envisagé, tel qu'illustré sur la figure 5, de monter une poignée 57 sur le bord gauche du cadre 531 du panneau mobile 53, au voisinage du rail supérieur 55, pour permettre aux occupants du véhicule de manoeuvrer le panneau mobile 53, en exerçant un effort réduit. Cette poignée peut se présenter par exemple sous la forme de deux crochets disposés en vis-à-vis, ce qui la rend ergonomique. Chacun de ces crochets se prolonge par une tige à l'extrémité de laquelle est formé un pêne apte à coopérer avec une gâche solidaire d'un des rails 54, 55.

La figure 3 illustre schématiquement un mode de réalisation du passage entre la position illustrée à la figure 2A et la position illustrée à la figure 2B et inversement.

Le rail 16 comprend une glissière 31, à l'intérieur de laquelle peut se déplacer un élément 32 de support du panneau mobile 13. Ce déplacement en coulissement est illustré par la flèche 33.

Lorsque cet élément de support se trouve dans la position illustrée par la figure 2B, position également présentée sur la figure 3, il peut se décaler (flèche 34) perpendiculairement au plan défini par le panneau fixe, pour pénétrer dans un logement 35 (formant gâche de blocage). Lorsque l'élément de support 32 se trouve dans cette gâche 35, le panneau mobile se trouve dans le plan du panneau fixe, en position fermée. Des moyens de rappel, non représentés, peuvent tendre à ramener le panneau mobile dans cette position.

Le déplacement 34 peut par exemple être assuré par un élément biseauté 36 solidaire de la poignée 17 et pouvant se déplacer parallèlement au plan du panneau 14 (flèche 37). Cette pièce comprend un biseau 361, prévu pour coopérer avec un biseau complémentaire dans la pièce de support 32 de façon que le déplacement 37 contrôle le déplacement 34.

Bien sûr, de nombreux autres modes de réalisation peuvent être envisagés pour contrôler ce déplacement, en utilisant par exemple les techniques déjà développées par le Demandeur pour des baies à rails rectilignes.

Plus généralement, la forme des glissières, des éléments de support et de guidage du panneau mobile (qui peuvent par exemple être des pions), les moyens d'actionnement, les moyens de verrouillage, pourront être adaptés en fonction des besoins, le cas échéant être motorisés.

Le panneau fixe 14 et le panneau mobile 13 peuvent prendre différentes formes et par exemple celle illustrée par les figures 4A à 4C.

Dans l'exemple de la figure 4A, le panneau fixe définit sensiblement un secteur de disque, et le rail supérieur 15 suit donc le bord correspondant du panneau fixe.

Dans le cas illustré par la figure 4B, le panneau fixe est plus large, et définit par exemple un secteur d'ellipse. Dans ce cas, le rail 15 s'étend en travers du panneau fixe 14. Il est alors visible de l'extérieur, mais les designers pourront, le cas échéant, exploiter cette courbe.

Comme le montre la figure 4C, on peut également prévoir que les rails 15 et 16 se prolongent au-delà du panneau fixe 14, de façon à permettre un dégagement plus important du panneau mobile 13 et donc une augmentation de l'ouverture correspondante.

Ces rails 15 et 16 peuvent avantageusement pénétrer à l'intérieur de la carrosserie, et le cas échéant participer à la solidarisation du dispositif d'obturation au véhicule.

Le rail inférieur 16 peut être dissimulé, ou englobé dans un cache de garniture intérieure. De même le rail supérieur 15 peut être intégré dans la garniture supérieure du véhicule.

Selon les véhicules et le design de ces derniers, l'axe de pivotement peut bien sûr être placé en position supérieure ou en position inférieure, par rapport au véhicule, et vers l'arrière ou vers l'avant de ce dernier.

Plus généralement, l'invention n'est pas limitée à une vitre de custode, et on peut prévoir d'utiliser cette approche à deux rails concentriques pour différents types de baies, le cas échéant, en prévoyant plusieurs ouvertures sur un même dispositif.

### 6.2. Deuxième exemple de mode de réalisation de l'invention

On présente un deuxième exemple de mode de réalisation de l'invention en référence à la figure 6A, présenté vu de l'intérieur du véhicule. Ce mode de réalisation met avantageusement en oeuvre des rails de forme interne simple, pouvant être fabriqués à moindre coût.

Comme on le voit sur la figure 6A, le panneau fixe 61, collé à la carrosserie, porte deux rails de guidage concentriques 63 et 64, définissant chacun un arc de cercle, permettant le guidage en pivotement du panneau mobile 62, dans le plan de coulissement parallèle au plan défini par le panneau fixe 61.

Dans ce mode de réalisation, le coulissement, correspondant à un pivotement du panneau mobile 62 dans les rails 63 et 64, et le déplacement de fermeture/ouverture selon un axe sensiblement perpendiculaire au plan de coulissement, sont assurés, en partie inférieure, à l'aide d'un coulisseau 66 formant navette, circulant dans une glissière interne du rail inférieur 63, et d'un élément de guidage 67 solidaire du cadre 65 du panneau mobile 62, entre lesquels est monté un ressort de rappel 611.

Comme représenté sur la figure 6B dans une vue de dessus A-A de la zone du rail inférieur 63 (le rail 63 est représenté en pointillés sur cette figure pour plus de lisibilité), le coulisseau 66 est constitué de deux patins 68 et 69 reliés par une barre de liaison 610. Des gorges de guidage 612, prévues pour recevoir la base de deux pions de guidage 613 fixés au bord inférieur du cadre 65, sont formées dans ces patins 68, 69. Ces gorges de guidage 612 présentent chacune une portion inclinée 614 d'un angle égal, par exemple, à environ 45° par rapport à la direction de la glissière interne du rail 63.

Pour faciliter le coulissement et la rotation du panneau mobile, les deux patins 68, 69, la barre de liaison 610 et l'élément de guidage 67 présentent un profil courbe correspondant sensiblement au rayon de courbure du rail 63.

Dans des variantes de ce mode de réalisation de l'invention, il peut également être envisagé de prévoir des patins.

Le panneau mobile peut être verrouillé en position d'obturation par exemple par immobilisation des pions de guidage 613 dans des gâches 615 formées dans le rail 63.

Une poignée unique 616 (voir la figure 6A), montée mobile par rapport au cadre 65 et solidaire du patin 69, coopère alors avec ce patin pour commander le déplacement du panneau coulissant 62 et/ou son verrouillage ou son déverrouillage, en modifiant la position relative du coulisseau 66 et de l'élément de guidage 67, selon la technique décrite en détail dans le document PCT/EP2008/067264 du même Demandeur que la présente demande.

Cette poignée 616 peut présenter une zone de préhension 617 disposée sur la partie supérieure du bord droit du cadre 67, au voisinage du rail supérieur 64. L'entraînement du panneau mobile 62 demande ainsi peu d'efforts.

## Revendications

1. Dispositif d'obturation (12) d'une baie ménagée (11) dans la carrosserie d'un véhicule automobile, comprenant :
- un panneau fixe (14) dans lequel est définie une ouverture, la face dudit panneau fixe tournée vers l'intérieur dudit véhicule étant apte à être solidarisée par sa périphérie sur des bords correspondants de ladite carrosserie, de sorte que ledit panneau fixe affleure avec ladite carrosserie vu de l'extérieur;
- au moins un panneau mobile (13) par rapport audit panneau fixe, entre une position d'obturation de ladite ouverture, dans laquelle ledit panneau mobile se trouve dans le plan formé par ledit panneau fixe et au moins une position de coulissement, dans laquelle ledit panneau mobile se trouve dans un plan de coulissement sensiblement parallèle audit plan formé par ledit panneau fixe; et
- des moyens de décalage dudit panneau mobile entre ladite position d'obturation et ladite position de coulissement et vice-versa,
**caractérisé en ce que** ledit panneau fixe (14) porte sur ladite face tournée vers l'intérieur dudit véhicule, un premier (15) et un second (16) rails de guidage concentriques, définissant chacun un arc de cercle de façon à guider ledit panneau mobile (13) en pivotement dans ledit plan de coulissement et autour d'un axe de pivotement perpendiculaire audit plan de coulissement, lorsque ledit panneau mobile (13) est dans ladite position de coulissement

2. Dispositif d'obturation selon la revendication 1, **caractérisé en ce que** ledit panneau mobile présente une forme sensiblement en secteur de disque ou en secteur de couronne.

3. Dispositif d'obturation selon l'une quelconque des revendications 1 et 2, **caractérisé en ce qu'**au moins un desdits rails comprend des moyens de guidage dudit panneau mobile de façon à permettre le passage de ce dernier dudit plan d'obturation dans ledit plan de coulissement, et réciproquement, lorsque ledit panneau mobile est en regard de ladite ouverture.

4. Dispositif d'obturation selon la revendication 3, **caractérisé en ce qu'**il comprend des moyens de rappel tendant à ramener ledit panneau mobile dans ladite position d'obturation lorsque ledit panneau est en regard de ladite ouverture.

5. Dispositif d'obturation selon l'une quelconque des revendications 3 et 4, **caractérisé en ce qu'**un desdits rails porte au moins un coulisseau comprenant au moins deux patins dans chacun desquels est définie une gorge de guidage présentant au moins une portion inclinée, et dans chacune desquelles circulent un pion de guidage solidaire dudit panneau mobile.

6. Dispositif d'obturation selon l'une quelconque des revendications 2 à 5, **caractérisé en ce que** ledit premier rail s'étend au voisinage du bord dudit secteur éloigné dudit axe de pivotement.

7. Dispositif d'obturation selon l'une quelconque des revendications 1 à 6, **caractérisé en ce que** ledit panneau mobile est solidaire d'une poignée d'entraînement et/ou de verrouillage.

8. Dispositif d'obturation selon la revendication 7, **caractérisé en ce que** ladite poignée est montée au niveau dudit second rail.

9. Dispositif d'obturation selon l'une quelconque des revendications 7 et 8, **caractérisé en ce que** ledit second rail et/ou ladite poignée coopèrent avec des moyens de masquage solidaires dudit panneau fixe.

10. Dispositif d'obturation selon l'une quelconque des revendications 7 à 9, **caractérisé en ce que** ladite poignée d'entraînement coopère avec des moyens de blocage de ladite poignée dans une position prédéterminée par rapport audit panneau coulissant, dite position d'entraînement, de façon à contrôler le déplacement dudit panneau mobile en coulissement.

11. Dispositif d'obturation selon l'une quelconque des revendications 7 à 10, **caractérisé en ce que** ladite poignée est mobile suivant une direction perpendiculaire au plan dudit panneau fixe, de façon à faire passer ledit panneau mobile de ladite position d'obturation à une position de dégagement dans un plan parallèle au plan dudit panneau fixe, sensiblement en regard de ladite ouverture, et réciproquement.

12. Dispositif d'obturation selon l'une quelconque des revendications 7 à 11, **caractérisé en ce que** ladite poignée comprend des moyens de verrouillage dudit panneau coopérant avec une gâche portée par ledit panneau fixe, dans ladite position d'obturation.

13. Dispositif d'obturation selon l'une quelconque des revendications 1 à 12, **caractérisé en ce qu'**il comprend des moyens d'actionnement motorisés dudit panneau mobile et/ou de ladite poignée.

14. Dispositif d'obturation selon l'une quelconque des revendications 1 à 13, **caractérisé en ce qu'**au moins un desdits rails s'étend au-delà de la surface définie par ledit panneau fixe.

15. Véhicule automobile comprenant au moins un dispositif d'obturation (12) d'une baie (11) ménagée dans la carrosserie dudit véhicule automobile selon l'une quelconque des revendications 1 à 14, ledit dispositif comprenant :
- un panneau fixe (14) dans lequel est définie une ouverture, la face dudit panneau fixe tournée vers l'intérieur dudit véhicule étant apte à être solidarisée par sa périphérie sur des bords correspondants de ladite carrosserie, de sorte que ledit panneau fixe affleure avec ladite carrosserie vu de l'extérieur ;
- au moins un panneau mobile (13) par rapport audit panneau fixe, entre une position d'obturation de ladite ouverture, dans laquelle ledit panneau mobile se trouve dans le plan formé par ledit panneau fixe et au moins une position de coulissement, dans laquelle ledit panneau mobile se trouve dans un plan de coulissement sensiblement parallèle audit plan formé par ledit panneau fixe ; et
- des moyens de décalage dudit panneau mobile entre ladite position d'obturation et ladite position de coulissement et vice-versa,
**caractérisé en ce que** ledit panneau fixe porte (14), sur ladite face tournée vers l'intérieur dudit véhicule, un premier (15) et un second rails (16) de guidage concentriques, définissant chacun un arc de cercle de façon à guider ledit panneau mobile (13) en pivotement dans ledit plan de coulissement et autour d'un axe de pivotement perpendiculaire audit plan de coulissement, lorsque ledit panneau mobile (13) est dans ladite position de coulissement.

## Patentansprüche

1. Verschlussvorrichtung (12) einer in der Karosserie eines Kraftfahrzeugs eingerichteten Öffnung (11), die aufweist:
- eine stationäre Platte (14), in der eine Öffnung definiert ist, wobei die der Innenseite des Fahrzeugs zugewandte Seite der stationären Platte dazu geeignet ist, an ihrem Umfang auf entsprechenden Rändern der Karosserie befestigt zu werden, so dass die stationäre Platte mit der Karosserie von außen gesehen bündig ist,
- wenigstens eine Klappe (13), die relativ zu der stationären Platte zwischen einer Verschlussposition der Öffnung, in der sich die bewegliche Platte in der von der stationären Platte gebildeten Ebene befindet, und wenigstens einer Schiebeposition, in der sich die bewegliche Platte in einer Schiebeebene im Wesentlichen parallel zu der von der stationären Platte gebildeten Ebene befindet, beweglich ist, und
- Mittel zum Versetzen der beweglichen Platte zwischen der Verschlussposition und der Schiebeposition und umgekehrt,
**dadurch gekennzeichnet, dass** die stationäre Platte (14) auf der dem Inneren des Fahrzeugs zugewandten Seite eine erste (15) und eine zweite (16) konzentrische Führungsschiene aufweist, die jeweils einen Kreisbogen derart definieren, dass die bewegliche Platte (13) unter Schwenken in der Schiebeebene und um eine Schwenkachse senkrecht zu der Schiebeebene geführt wird, wenn die bewegliche Platte (13) in der Schiebeposition ist.

2. Verschlussvorrichtung nach Anspruch 1, **dadurch gekennzeichnet, dass** die bewegliche Platte eine Form im Wesentlichen eines Scheiben- oder Kranzabschnitts aufweist.

3. Verschlussvorrichtung nach einem der Ansprüche 1 und 2, **dadurch gekennzeichnet, dass** wenigstens eine der Schienen Mittel zum Führen der beweglichen Platte derart aufweist, dass der Übergang dieser Letzteren von der Verschlussebene in die Schiebeebene und umgekehrt erlaubt wird, wenn die bewegliche Platte gegenüber der Öffnung liegt.

4. Verschlussvorrichtung nach Anspruch 3, **dadurch gekennzeichnet, dass** sie Rückholmittel aufweist, die dahingehend wirken, die bewegliche Platte in die Verschlussposition zurückzuholen, wenn die Platte der Öffnung gegenüberliegt.

5. Verschlussvorrichtung nach einem der Ansprüche 3 und 4, **dadurch gekennzeichnet, dass** eine der Schienen wenigstens eine Gleitführung aufweist, die wenigstens zwei Kufen aufweist, in welchen eine Führungsrinne definiert ist, die wenigstens einen schrägen Abschnitt aufweist, und in welchen ein Führungsstift läuft, der fest mit der beweglichen Platte verbunden ist.

6. Verschlussvorrichtung nach einem der Ansprüche 2 bis 5 , **dadurch gekennzeichnet, dass** sich die erste Schiene benachbart zu dem Rand des Abschnitts erstreckt, der von der Schwenkachse entfernt ist.

7. Verschlussvorrichtung nach einem der Ansprüche 1 bis 6, **dadurch gekennzeichnet, dass** die bewegliche Platte fest mit einem Antriebs- und/oder Verriegelungsgriff verbunden ist.

8. Verschlussvorrichtung nach Anspruch 7, **dadurch gekennzeichnet, dass** der Griff auf Höhe der zweiten Schiene montiert ist.

9. Verschlussvorrichtung nach einem der Ansprüche 7 und 8, **dadurch gekennzeichnet, dass** die zweite Schiene und/oder der Griff mit Abdeckmitteln zusammenwirken, die fest mit der stationären Platte verbunden sind.

10. Verschlussvorrichtung nach einem der Ansprüche 7 bis 9, **dadurch gekennzeichnet, dass** der Antriebsgriff mit Mitteln zum Blockieren des Griffs in einer vorbestimmten Position relativ zu der Schiebeplatte, Antriebsposition genannt, derart zusammenwirkt, dass die Bewegung der beweglichen Platte beim Schieben gesteuert wird.

11. Verschlussvorrichtung nach einem der Ansprüche 7 bis 10, **dadurch gekennzeichnet, dass** der Griff in einer Richtung senkrecht zu der Ebene der stationären Platte derart beweglich ist, dass die bewegliche Platte von der Verschlussposition zu einer Freigabeposition in einer Ebene parallel zu der Ebene der stationären Platte im Wesentlichen gegenüber der Öffnung übergeht und umgekehrt.

12. Verschlussvorrichtung nach einem der Ansprüche 7 bis 11, **dadurch gekennzeichnet, dass** der Griff Verriegelungsmittel der Platte aufweist, die mit einem Schließhaken, der von der stationären Platte getragen wird, in der Verschlussposition zusammenwirken.

13. Verschlussvorrichtung nach einem der Ansprüche 1 bis 12, **dadurch gekennzeichnet, dass** sie motorisierte Mittel zum Betätigen der beweglichen Platte und/oder des Griffs aufweist.

14. Verschlussvorrichtung nach einem der Ansprüche 1 bis 13, **dadurch gekennzeichnet, dass** sich wenigstens eine der Schienen über die Oberfläche, die von der stationären Platte definiert wird, hinaus erstreckt.

15. Kraftfahrzeug, das wenigstens eine Verschlussvorrichtung (12) nach einem der Ansprüche 1 bis 14 aufweist, einer in der Karosserie des Kraftfahrzeugs eingerichteten Öffnung (11), wobei die Vorrichtung aufweist:
- eine stationäre Platte (14), in der eine Öffnung definiert ist, wobei die dem Inneren des Fahrzeugs zugewandte Seite der stationären Platte dazu geeignet ist, fest an ihrem Umfang auf entsprechenden Rändern der Karosserie befestigt zu werden, so dass die stationäre Platte mit der Karosserie von außen gesehen bündig ist,
- wenigstens eine Platte (13), die relativ zu der stationären Platte zwischen einer Verschlussposition der Öffnung, in der sich die bewegliche Platte in der von der stationären Platte gebildeten Ebene befindet, und wenigstens einer Schiebeposition, in der sich die bewegliche Platte in einer Schiebeebene im Wesentlichen parallel zu der von der stationären Platte gebildeten Ebene befindet, beweglich ist, und
- Mittel zum Versetzen der beweglichen Platte zwischen der Verschlussposition und der Schiebeposition und umgekehrt,
**dadurch gekennzeichnet, dass** die stationäre Platte (14) auf der dem Inneren des Fahrzeugs zugewandten Seite eine erste (15) und eine zweite (16) konzentrische Führungsschiene aufweist, die jeweils einen Kreisbogen derart definieren, dass die bewegliche Platte (13) unter Schwenken in der Schiebeebene und um eine Schwenkachse senkrecht zu der Schiebeebene geführt wird, wenn die bewegliche Platte (13) in der Schiebeposition ist.

## Claims

1. Closing device (12) for a bay (11) arranged in the body of a motor vehicle, said device comprising:
- a fixed panel (14) in which an opening is defined, that face of the said fixed panel which faces towards the interior of the said vehicle being capable of being fastened by its periphery onto corresponding edges of the said body, in such a way that the said fixed panel is flush with the said body when viewed from the outside;
- at least one panel (13) which is movable in relation to the said fixed panel between a position in which it closes the said opening and in which the said movable panel is located in the plane formed by the said fixed panel, and at least one sliding position, in which the said movable panel is located in a plane of sliding motion which is substantially parallel to the said plane formed by the said fixed panel; and
- means for offsetting the said movable panel between the said closing position and the said sliding position and *vice versa,*
**characterised in that** the said fixed panel (14) carries, on the said face which faces towards the interior of the said vehicle, a first guide rail (15) and a second guide rail (16) which are concentric and which each define an arc of a circle in such a way as to guide the said movable panel (13) in pivoting motion within the said plane of sliding motion and about an axis of pivoting which is perpendicular to the said plane of sliding motion, when the said movable panel (13) is in the said sliding position.

2. Closing device according to claim 1, **characterised in that** the said movable panel has substantially the shape of a sector of a disc or a sector of a ring.

3. Closing device according to either of claims 1 or 2, **characterised in that** at least one of the said rails comprises means for guiding the said movable panel in such a way as to permit the passage of the latter from the said plane of closure into the said plane of sliding motion, and conversely, when the said movable panel is opposite the said opening.

4. Closing device according to claim 3, **characterised in that** it comprises return means which tend to bring the said movable panel back into the said closing position when the said panel is opposite the said opening.

5. Closing device according to either of claims 3 or 4, **characterised in that** one of the said rails carries at least one slide comprising at least two runners within each of which there is defined a guide groove having at least one inclined portion, and within each of which guide grooves there runs a guide pin which is integral with the said movable panel.

6. Closing device according to any of claims 2 to 5, **characterised in that** the said first rail extends in the vicinity of the edge of the said sector which is remote from the said axis of pivoting.

7. Closing device according to any of claims 1 to 6, **characterised in that** the said movable panel is integral with a driving and/or locking handle.

8. Closing device according to claim 7, **characterised in that** the said handle is mounted at the said second rail.

9. Closing device according to either of claims 7 or 8, **characterised in that** the said second rail and/or the said handle cooperate with masking means which are integral with the said fixed panel.

10. Closing device according to any of claims 7 to 9, **characterised in that** the said driving handle cooperates with means for immobilising the said handle in a predetermined position, referred to as the driving position, in relation to the said sliding panel, in such a way as to control the displacement of the said movable panel in sliding motion.

11. Closing device according to any of claims 7 to 10, **characterised in that** the said handle is movable in a direction perpendicular to the plane of the said fixed panel, in such a way as to cause the said movable panel to pass from the said closing position to a position of disengagement within a plane parallel to the plane of the said fixed panel, substantially opposite the said opening, and conversely.

12. Closing device according to any of claims 7 to 11, **characterised in that** the said handle comprises means for locking the said panel which cooperate with a notch carried by the said fixed panel when in the said closing position.

13. Closing device according to any of claims 1 to 12, **characterised in that** it comprises motorised means for operating the said movable panel and/or the said handle.

14. Closing device according to any of claims 1 to 13, **characterised in that** at least one of the said rails extends beyond the surface defined by the said fixed panel.

15. Motor vehicle comprising at least one closing device (12) for a bay (11) arranged in the body of the said motor vehicle according to any of claims 1 to 14, the said device comprising:
- a fixed panel (14) in which an opening is defined, that face of the said fixed panel which faces towards the interior of the said vehicle being capable of being fastened by its periphery onto corresponding edges of the said body, in such a way that the said fixed panel is flush with the said body when viewed from the outside;
- at least one panel (13) which is movable in relation to the said fixed panel between a position in which it closes the said opening and in which the said movable panel is located in the plane formed by the said fixed panel, and at least one sliding position, in which the said movable panel is located in a plane of sliding motion which is substantially parallel to the said plane formed by the said fixed panel; and
- means for offsetting the said movable panel between the said closing position and the said sliding position and *vice versa,*
**characterised in that** the said fixed panel (14) carries, on the said face which faces towards the interior of the said vehicle, a first guide rail (15) and a second guide rail (16) which are concentric and which each define an arc of a circle in such a way as to guide the said movable panel (13) in pivoting motion within the said plane of sliding motion and about an axis of pivoting which is perpendicular to the said plane of sliding motion, when the said movable panel (13) is in the said sliding position.
